**Europäisches Patentamt**

**European Patent Office**

**Office européen des brevets**

(19)

(11) Publication number : **0 510 973 A1**

## (12) EUROPEAN PATENT APPLICATION

(21) Application number : **92303661.0**

(22) Date of filing : **23.04.92**

(51) Int. Cl.⁵ : **H04N 7/00, H04N 5/44**

(30) Priority : **25.04.91 JP 95809/91**

(43) Date of publication of application :
**28.10.92 Bulletin 92/44**

(84) Designated Contracting States :
**DE FR GB NL**

(71) Applicant : **MATSUSHITA ELECTRIC INDUSTRIAL CO., LTD.**
**1006, Kadoma**
**Kadoma-shi, Osaka-fu 571 (JP)**

(72) Inventor : **Kageyama, Sadashi**
**2-59-5-203, Minaminakaburi**
**Hirakata-shi, Osaka-fu 573 (JP)**
Inventor : **Inoue, Shuji**
**51-7-201, Oedahigashi**
**Moriguchi-shi, Osaka-fu 570 (JP)**
Inventor : **Yasumoto, Yoshio**
**2-1899-82, Shouyoudai**
**Nara-shi, Naraken 631 (JP)**
Inventor : **Uwabata, Hideyo**
**7-27-12-101, Toyosato, Higashiyodogawa-ku**
**Osaka-shi, Osaka-fu 533 (JP)**

(74) Representative : **Crawford, Andrew Birkby et al**
**A.A. THORNTON & CO. Northumberland**
**House 303-306 High Holborn**
**London WC1V 7LE (GB)**

(54) **Television signal processing apparatus.**

(57) A television signal processing apparatus is capable of generating a television signal which is compatible with a television signal of aspect ratio of 4 :3 and possesses an aspect ratio greater than 4 :3. At the transmission side, a video signal having a greater aspect ratio than 4 :3 is converted into a first signal which settles within an image frame determined in a standard, and a second signal is disposed in other area than the image frame. An offset is applied to a pedestal in a horizontal blanking interval in an other area than the image frame, and a set-up is applied to the pedestal in an effective scanning period in the other area than the image frame. At the reception side, the offset and set-up of the pedestal in the multiplexed portion of the second signal are removed from a received signal, and a circuit for restoring the second signal is provided. When the generated television signal is received by an existing television receiver, the second signal is not annoying, and in a special-purpose receiver, a high resolution image of aspect ratio of 16 :9 less in noise deterioration of the second signal can be received.

Fig. 3

EP 0 510 973 A1

## BACKGROUND OF THE INVENTION

### 1. Field of the Invention

The present invention relates to a television signal processing apparatus for multiplexing and transmitting additional information by time-division multiplexing the additional information with an existing television broadcast signal, within the same transmission band of the existing television broadcast signal.

### 2. Description of the Prior Art

The existing television broadcast conforms to the NTSC (National Television System Committee) system in the specifications of 525 scanning lines, 2:1 interlace scanning, 4.2 MHz luminance signal horizontal band width, and 4:3 aspect ratio (horizontal to vertical ratio of screen). Recently a television signal processing method which is compatible with the existing television broadcast and is capable of receiving an image of aspect ratio of 16:9 at the receiving side has been proposed.

A prior art relating to the invention is described below while referring to the drawings.

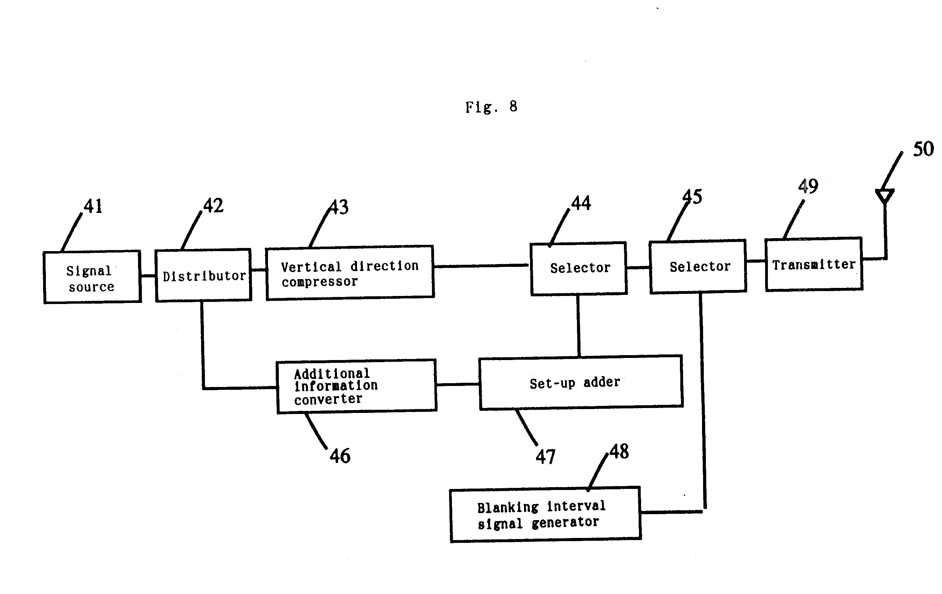

Fig. 8 shows an example of transmission side processing apparatus of the television signal processing method which is compatible with the existing television broadcast and is capable of receiving an image of an aspect ratio of 16:9 at the receiving side. In Fig. 8, numeral 41 is a signal source, 42 is a distributor, 43 is a vertical direction compressor, 44 and 45 are selectors, 46 is an additional information converter, 47 is a set-up adder, 48 is a blanking interval signal generator, 49 is a transmitter, and 50 is an antenna.

A signal from the video signal source 41 of 480 effective scanning lines and 16:9 aspect ratio is distributed into the vertical direction compressor 43 and additional information converter 46 by the distributor 42. In the vertical direction compressor 43, in order to realize the aspect ratio of 16:9 of an oblong screen, the scanning lines are compressed from 480 to 360. In the additional information converter 46, in order to settle the vertical high frequency components and horizontal high frequency components within the transmission capacity, band limitation, vertical direction compression, and frequency conversion are conducted. The output of the additional information converter 46 is entered in the set-up adder 47. In the set-up adder 47, the additional information is provided with a set-up (DC potential), and is disposed in the portion of the remaining 120 lines of the 480 scanning lines compressed to 360 (60 lines each in top and bottom, hereinafter called top and bottom bars). The resultant additional Information signal is changed over with the output of the vertical direction compressor 43 at constant intervals by the selector 44.

The output of the selector 44 is fed into the selector 45. In the blanking interval signal generator 48, sync signals in the horizontal and vertical blanking intervals, color burst signal, and pedestal level are generated. The output of the blanking interval signal generator 48 is changed over with the output of the selector 44 at constant intervals by the selector 45. The output of the selector 45 is sent through the transmitter 49 and antenna 50. In this prior art, the signal having the video signal of 16:9 aspect ratio located in the central 360 lines and additional information multiplexed in 120 lines in the top and bottom bars is transmitted.

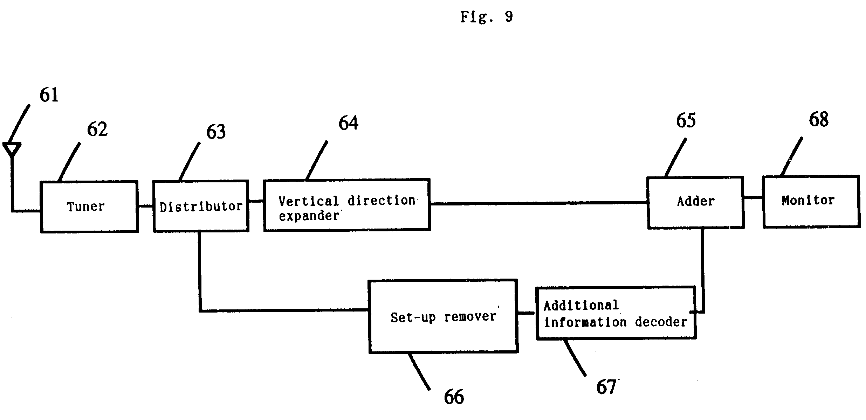

Fig. 9 shows an example of a receiving side processing apparatus for receiving the signal sent out from the transmission side processing apparatus shown in Fig. 8. Numeral 61 is an antenna, 62 is a tuner, 63 is a distributor, 64 is a vertical direction expander, 65 is an adder, 66 is a set-up remover, 67 is an additional information decoder, and 68 is a monitor. The signal demodulated to the base band is distributed into the vertical direction expander 64 and set-up remover 66 by the distributor 63. In the vertical direction expander 64, the scanning lines are expanded from 360 lines to 480 lines. In the set-up remover 66, the set-up applied at the transmission side in the top and bottom bars is removed. The output of the set-up remover 66 is fed to the additional information decoder 67. In the additional information decoder 67, by band limitation, vertical direction expansion and frequency conversion, the additional information is restored to the original vertical high frequency components and horizontal high frequency components. The outputs of the vertical direction expander 64 and the additional information decoder 67 are summed up in the adder 65, and displayed in the monitor 68 of the 16:9 aspect ratio. In Figs. 8 and 9, meanwhile, the color signal multiplexing, separation processing and others relating to the NTSC are omitted because they are known arts (see "An experimental report for second generation EDTV (1)" by Urano et al., ITEJ Technical Report Vol. 14, No. 20, pp. 19-24, BCS90-22, March 1990).

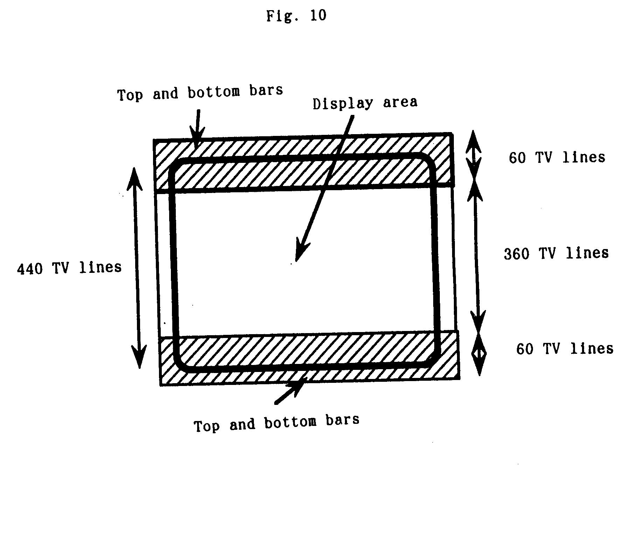

Fig. 10 shows the screen of displaying the reception of the output of the transmission side signal processing apparatus by the existing television receiver. When the existing NTSC television broadcast of 525 scanning lines (the number of effective scanning lines for transmitting video signal is about 480) is received by the existing television receiver, there is an overscan (the invisible portion concealed by the frame of the television receiver) in the vertical direction of about 8%, so that the actually displayed scanning lines are about 440. When the output of the transmission side signal processing apparatus having video signal in the central 360 lines with additional information multiplexed in 120 lines in the top and bottom bars (the shaded area in Fig. 10) is received, about 80 lines of the top and bottom bars are displayed. It is the condition of the new broadcasting system that there is no interference or adverse effect if displayed by the existing television receiver, that is, the compatibility is guaranteed.

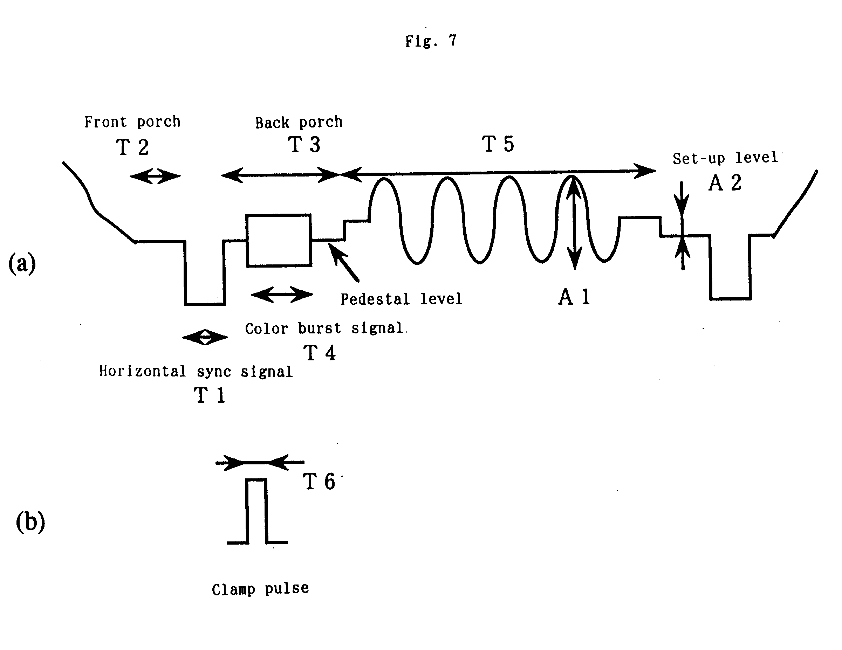

Therefore, in order that the displayed top and bottom bars look naturally, the signal level of the top and bottom bars is lowered to the level as close to the black level as possible, and the multiplex level is lowered so that the multiplexed additional information may be invisible. An example of waveform in one horizontal scanning period of the top and bottom bars is shown in Fig. 7 (a). In Fig. 7 (a), the signal indicated in period T1 is a horizontal sync signal, T2 is a front porch, T3 is a back porch, T4 is a color burst signal, T5 is an additional information, A1 is the amplitude of the additional information, and A2 is the amplitude of the set-up level. In Fig. 7 (b), the clamp pulse waveform is adjusted in the time axis with the waveform in Fig. 7 (a). The signal indicated in period T6 is a clamp pulse.

Generally in a television receiver, the clamp circuit is used in order to reproduce the DC potential of the video signal. In the clamp circuit, by holding the DC potential of the signal portion gated by the clamp pulse, the DC potential of the entire video signal is reproduced. Clamping may be done in the period of sync signal or in the period of back porch. Usually, in order to avoid the effect of amplitude variations of the sync signal, clamping is done in the back porch as shown in Figs. 7 (a) and 7 (b). Meanwhile, the color burst signal is usually removed by band limitation so as not to adversely effect the clamping. The reference level of the DC potential generated by clamping is the pedestal level of the back porch period. This level is the black reference level of the video signal. In the portion of the top and bottom bars displayed in the existing receiver, the amplitude A1 of the additional information must be reduced as shown in Fig. 7 (a). Besides, since the signal below the pedestal level is likely to adversely affect the sync signal processing circuit performing such as synchronous separation, the set-up level A2 is required. Yet, since the level of the signal is always close to the black level, considering the negative modulation of television broadcasting, the average transmission power of the transmitter is increased.

Thus, in the conventional television signal processing method, when this signal is received by the existing television receiver, the added information is visible in the top and bottom parts of the screen, which is very annoying. If the amplitude of the additional signal is reduced to such an extent that it may not be detected, the ratio of the signal of the additional information reproduced by the special-purpose receiver to the noise deteriorates. In addition, since the rate of the signal close to the black level increases, the average transmission power increases, and the efficiency is worsened economically.

## SUMMARY OF THE INVENTION

It is hence a primary object of the invention to present a television signal processing apparatus in which the multiplexed additional information signal is not obvious in the top and bottom parts of the screen when received by the existing television receiver, the image of high resolution with aspect ratio of 16:9 less in deterioration due to noise of additional information can be reproduced in a special-purpose receiver, and the transmission power is not increased.

To achieve the above object, a television signal processing apparatus at the transmission side of the invention comprises means for converting a video signal having a larger aspect ratio than an aspect ratio 4:3 of an image determined in the standard of a transmission system into a first signal settling within an image frame specified in the standard, means for obtaining a second signal different from the converted first signal, means for disposing the second signal in other area than the image frame, means for adding an offset to a pedestal in a horizontal blanking interval in the other area than the image frame, and means for adding a set-up to the pedestal in an effective scanning period in the other area than the image frame.

A television signal processing apparatus at the reception side of the invention comprises means for receiving a signal generated in the television signal processing apparatus at the transmission side, and removing from the received signal the offset and set-up of the pedestal in the portion in which the second signal is multiplexed, means for restoring the second signal, and means for converting the first signal.

In the above constitution, while keeping compatibility with the existing television broadcasting, it is possible to generate a television signal capable of multiplexing and transmitting the information of the original image having a larger aspect ratio than 4:3. That is, if the television signal generated in the above method is received by the existing television receiver, the information added in the period of the top and bottom bars as an additional signal is not visible. In a special-purpose receiver, the image of high resolution with aspect ratio of 16:9 with less noise deterioration of the additional information is received. Besides, the transmission power is not unnecessarily increased.

## BRIEF DESCRIPTION OF THE DRAWINGS

Fig. 1 is a block diagram showing an example of television signal processing apparatus at transmission side of the invention,
Fig. 2 is a block diagram showing an example of television signal processing apparatus at reception side of the invention,
Fig. 3 is a waveform diagram showing an example of signal waveform multiplexing additional information signal, in television signal processing at transmission side of the invention,

Fig. 4 is a waveform diagram showing other example of signal waveform multiplexing additional information signal, in television signal processing at transmission side of the invention,

Fig. 5 is a waveform diagram showing a different example of signal waveform multiplexing additional information signal, in television signal processing at transmission side of the invention,

Fig. 6 is a waveform diagram showing an example of signal waveform when the signal after television signal processing at transmission side of the invention is received and clamped by an existing receiver,

Fig. 7 (a) is a signal waveform showing an example of a signal waveform after television signal processing at transmission side of the prior art,

Fig. 7 (b) is a waveform diagram showing an example of clamp pulse when receiving and clamping the signal after television signal processing at transmission side of the prior art, in an existing receiver,

Fig. 8 is a block diagram showing a television signal processing apparatus at transmission side of the prior art,

Fig. 9 is a block diagram showing a television signal processing apparatus at reception side of the prior art,

Fig. 10 is a schematic diagram showing an image frame of the picture when the signal transmitted in the television signal processing method of the invention or prior art is received by an existing receiver.

Fig. 11 is a block diagram showing an example of internal composition of additional information converters 6, 46 in Fig. 1, Fig. 8,

Fig. 12 is a block diagram showing an example of internal composition of additional signal decoders 28, 67 in Fig. 2, Fig. 9, and

Fig. 13 is a block diagram showing an example of internal composition of an offset remover 26 in Fig. 2.

## DESCRIPTION OF THE PREFERRED EMBODIMENT

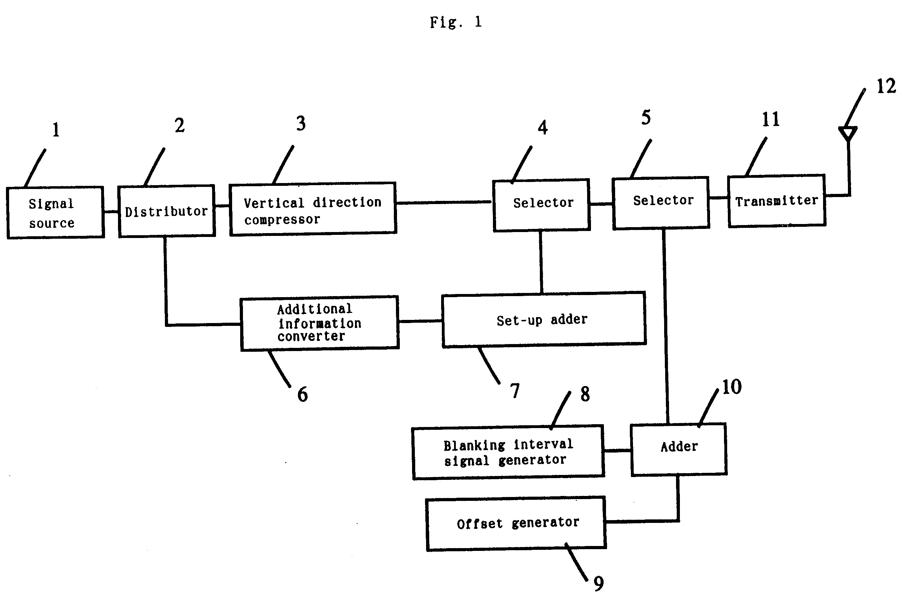

Fig. 1 is a block diagram at the transmission side for explaining the television signal processing apparatus of the invention. Numeral 1 is a signal source, 2 is a distributor, 3 is a vertical direction compressor, 4, 5 are selectors, 6 is an additional information converter, 7 is a set-up adder, 8 is a blanking interval signal generator, 9 is an offset generator, 10 is an adder, 11 is a transmitter, and 12 is an antenna.

The signal from the video signal source 1 of 480 effective scanning lines and 16:9 aspect ratio is distributed into the vertical direction compressor 3 and additional information converter 6 by the distributor 2.

In the vertical direction compressor 3, in order to realize the aspect ratio of 16:9 of an oblong screen, the scanning lines are compressed from 480 to, for example, 360. The output of the vertical direction compressor 3 is fed into the selector 4. In the additional information converter 6, in order to settle, for example, vertical high frequency components and horizontal high frequency components as additional information within the transmission capacity, band limitation, vertical direction compression and frequency conversion are carried out. The additional information may be only vertical high frequency components or only horizontal high frequency components, or both. The output of the additional information converter 6 is fed into the set-up adder 7. In the set-up adder 7, the additional information is provided with a set-up, and is disposed in the portions of the top and bottom bars. In the selector 4, the output of the set-up adder 7 is selected in the period of top and bottom bars. The output of the selector 4 is fed into the selector 5.

In the blanking interval signal generator 8, sync signals in the horizontal and vertical blanking intervals, color burst signal and pedestal level are generated. The output of the blanking period signal generator 8 is fed into the adder 10. The offset generator 9 generates an offset which is a DC potential to be added to the pedestal in the back porch in the horizontal blanking interval in the period of top and bottom bars. The value of the offset is not required to be always constant in the period of top and bottom bars. For example, depending on the offset removal characteristic of the clamp circuit in the existing receiver, the value of the offset may be decreased as approaching the period of video transmission in other period than the top and bottom bars. The output of the offset generator 9 and the output of the blanking interval signal generator 8 are summed up in the adder 10. The output of the adder 10 is changed over with the output of the selector 4 at a specific intervals by the selector 5. The output of the selector 5 is transmitted through the transmitter 11 and antenna 12.

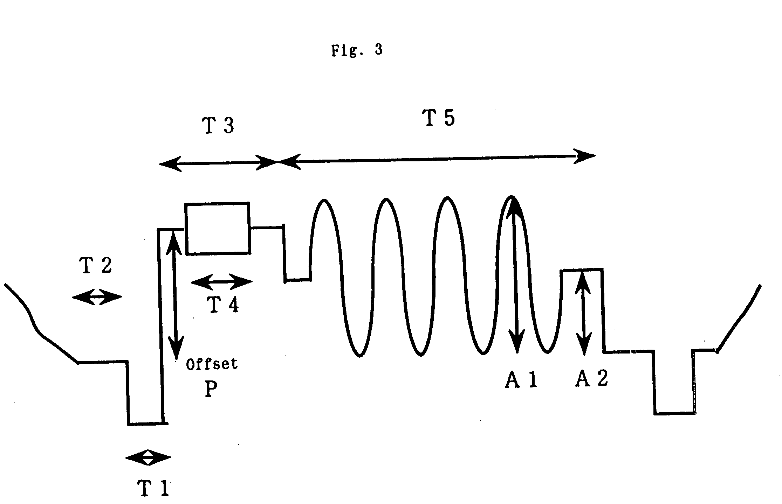

An example of signal waveform in one horizontal scanning period in the period of top and bottom bars is shown in Fig. 3. In Fig. 3, the signal indicated in period T1 is a horizontal sync signal, T2 is a front porch, T3 is a back porch, T4 is a color burst signal, T5 is an additional information, A1 is the amplitude of the additional information, A2 is the amplitude of the set-up, and P is the amplitude of the offset. The offset P is applied to the pedestal signal in the period of back porch T3. As clear from comparison with Fig. 7 (a), by applying this offset P, the amplitude A1 of the additional information may be extended without exceeding much the pedestal level or without adversely affecting the sync signal.

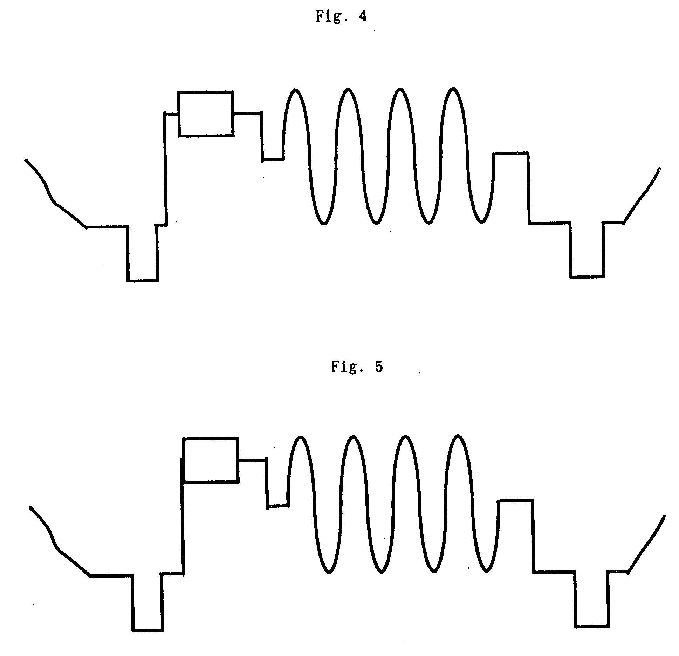

Depending on the period of applying the offset P, the methods shown in Figs. 4 and 5 may be also possible. In Fig. 4, the offset P is applied from the period between the trailing edge of horizontal sync signal and leading edge of color burst. In Fig. 5, the offset P is applied from the leading edge of color burst. These methods are intended to adjust the level before and after the horizontal sync signal similarly to the conventional method so as not to adversely affect the integrating circuit or the like of the sync signal processing of the existing receiver. Meanwhile, the information of offset P, set-up A2 and others may be transmitted by multiplexing, for example, in the vertical or horizontal blanking interval, overscan period or the like depending on the necessity.

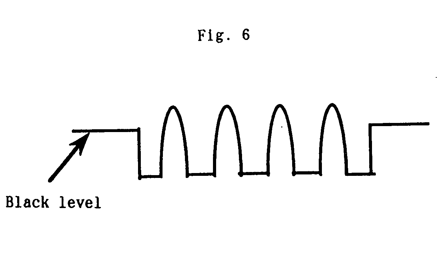

Explained next is the case of receiving the signal transmitted In the same transmission band as the existing broadcast by the existing receiver. In the portions of the top and bottom bars, as shown in Fig. 3, since the pedestal in the horizontal blanking interval is provided with the offset, the signal waveform clamped by the conventional back porch becomes as shown in Fig. 6. This is because the signal component below the usual clamp level is clipped in the conventional clamp circuit. Accordingly, the additional signal settles in the vicinity of black level, and is not displayed in the existing receiver, so that the additional information will not disturb.

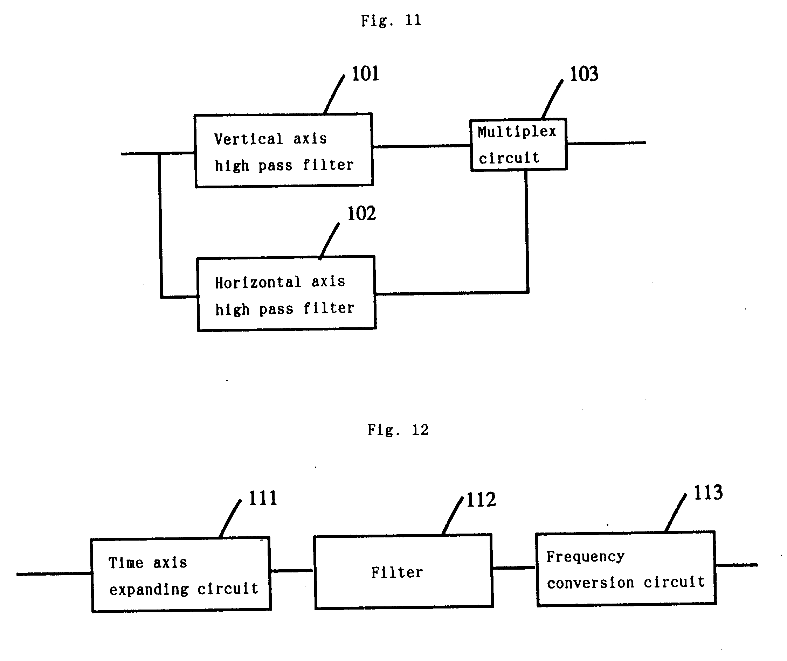

Fig. 11 is a block diagram showing an example of additional information converters 6 and 46 shown in Figs. 1 and 8. Numeral 101 is a vertical axis high pass filter, 102 is a horizontal axis high pass filter, and 103 is a multiplex circuit. The image signal from the signal source is fed into the vertical axis high pass filter 101 and horizontal axis high pass filter 102, and only the necessary band components are extracted. The output of the vertical axis high pass filter 101 and the output of the horizontal axis high pass filter 102 are fed into the multiplex circuit 103, in which these signals undergo time axis compression, frequency conversion and the like so as to settle within the transmission band, and are outputted in the format of time division multiplex or frequency division multiplex.

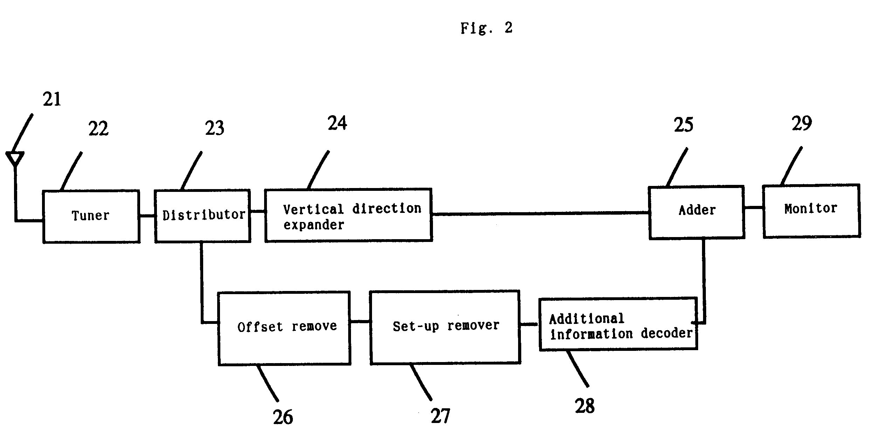

Fig. 2 shows an example of reception side processing apparatus for receiving the signal sent out from the transmission side processing apparatus shown in Fig. 1. Numeral 21 is an antenna, 22 is a tuner, 23 is a distributor, 24 is a vertical direction expander, 25 is an adder, 26 is an offset remover, 27 is a set-up remover, 28 is an additional information decoder, and 29 is a monitor.

The signal demodulated in the base band by the antenna 21 and tuner 22 is distributed into the vertical direction expander 24 and offset remover 26 by the distributor 23. In the vertical direction expander 24, the scanning lines are expanded from 360 to 480. In the offset remover 26, the offset applied to the pedestal at the transmission side as shown in Fig. 3 is removed. For offset removal, the clamp level is set so as not to distort the additional information when, for example, clamping the back porch pedestal, and when clamped, the reference potential is determined, so that the offset can be removed. That is, the clamp level is set corresponding to the applied amount of offset.

In-the set-up remover 27, the set-up applied at the transmission side in the parts of top and bottom bars is removed. The set-up is removed from the set-up information sent from the transmission side, or if the additional information is free from DC components, the set-up may be removed by a high pass filter or the like. The output of the set-up remover 27 is fed into the additional information decoder 28. In the additional information decoder 28, by band limitation, vertical direction expansion and frequency conversion, the additional information is restored into the original vertical high frequency components or horizontal high frequency components. The outputs of the vertical direction expander 24 and additional information decoder 28 are summed up in the adder 25, and displayed on the monitor 29 with the aspect ratio of 16:9. In Figs. 1 and 2, meanwhile, the multiplexing of color signal relating to the NTSC, separation processing of luminance signal and chrominance signal and others are known arts and are hence omitted.

Fig. 12 is a block diagram showing an example of internal configuration of the additional information decoders 28 and 67 in Figs. 2 and 9. Numeral 111 is a time axis expanding circuit, 112 is a filter, and 113 is a frequency conversion circuit. The signal being transmitted by time division multiplexing and frequency division multiplexing at the transmission side is restored to the initial time length in the time axis expanding circuit 111, separated on the frequency axis in the filter 112, and returned to the signal of the original band in the frequency conversion circuit 113. Compression and expansion of the time axis may be done, for example, by varying writing clock and reading clock of a memory.

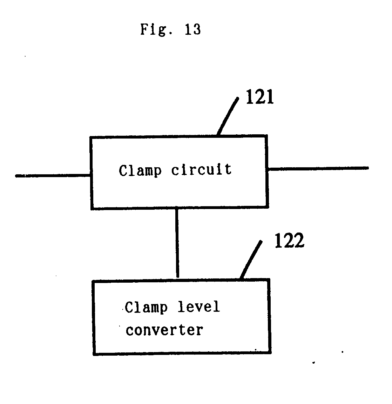

Fig. 13 is a block diagram showing an example of internal configuration of the offset remover 26 in Fig. 2. Numeral 121 is a clamp circuit, and 122 is a clamp level converter. The output signal from the tuner or the like is fed into the clamp circuit 121, and is clamped by the clamp pulse, for example, as shown in Fig. 7 for reproduction of DC component. Here, by the clamp level converter 122, the clamp level is changed over so that the level may differ between the period of top and bottom bars and the period of transmission of the central image. This is intended to reproduce, without amplitude distortion, the additional information transmitted in the period of top and bottom bars. In the clamp level converter, the different reference potentials are changed over by an analog switch or the like. The clamp circuit itself is a known art and is omitted herein.

In this embodiment, the original broadcasting system is the NTSC system, the number of effective scanning lines is 480, the number of scanning lines of the signal composed of vertical low frequency components is 360, and the additional information is composed of vertical high frequency components and horizontal high frequency components, but these are not limitative. The invention may be applied also to the PAL system or SECAM system. The additional information may be voice signal or the like. Or the additional information may be a signal processed in a format of digital signal.

In the television signal processing apparatus of the invention, by the television signal processing apparatus at the transmission side as shown in Fig. 1, for example in one embodiment of the invention, the additional information signal such as vertical high frequency component is multiplexed on the pedestal level in the portions of the top and bottom bars shown in Fig. 10, together with the offset and set-up as shown in Figs. 3, 4 and 5. In the prior art, the multiplexing amplitude was small considering that the additional information signal was disturbing when received by the existing receiver, but it is not necessary in this method. Therefore, a sufficient signal-to-noise (S/N) ratio of the additional information signal may be guaranteed.

By the television signal processing apparatus at the reception side as shown in Fig. 2, the offset in the multiplexed portions of the top and bottom bars is removed by clamping or the like, and the additional information is reproduced. That is, in the special-purpose receiver as shown in Fig. 2, by the reproduction of additional information less in deterioration of S/N ratio, an image of higher resolution with the aspect ratio of 16:9 can be received.

## Claims

1. A television signal processing apparatus at a transmission side, comprising:
    means for converting a video signal having a larger aspect ratio than an aspect ratio 4:3 of an image determined in a standard of a transmission system into a first signal settling within an image frame specified in the standard;
    means for obtaining a second signal different from the converted first signal;
    means for disposing the second signal in other area than the image frame;
    means for adding an offset to a pedestal in a horizontal blanking interval in the other area than the image frame; and
    means for adding a set-up to the pedestal in an effective scanning period in the other area than the image frame.

2. A television signal processing apparatus according to claim 1, wherein the larger aspect ratio than the aspect ratio of 4:3 is 16:9.

3. A television signal processing apparatus according to claim 1, wherein the means for converting the video signal into the first signal comprises means for converting the number of scanning lines of the video signal.

4. A television signal processing apparatus according to claim 1, wherein the means for obtaining the second signal comprises means for converting at least one of a vertical high frequency component and a horizontal high frequency component of the video signal within a transmission band.

5. A television signal processing apparatus according to claim 1, wherein the means for adding the offset to the pedestal comprises means for adding an offset having a specific value within a frame or an offset of a different value.

6. A television signal processing apparatus at a reception side for receiving a signal generated in a television signal processing apparatus at a transmission side which comprises means for converting a video signal having a larger aspect ratio than an aspect ratio 4:3 of an image determined in a standard of a transmission system into a first signal settling within an image frame specified in the standard, means for obtaining a second signal different from the converted first signal, means for disposing the second signal in other area than the image frame, means for adding an offset to a pedestal in a horizontal blanking interval in the other area than the image frame, and means for adding a set-up to the pedestal in an effective scanning period in the other area than the image frame, said apparatus at the reception side comprising:
    means for removing from the received signal the offset and set-up of the pedestal in a multiplexed portion of the second signal;
    means for restoring the second signal; and means for converting the first signal.

7. A television signal processing apparatus at the reception side according to claim 6, wherein the means for converting the first signal comprises means for converting the number of scanning lines of the video signal.

8. A television signal processing apparatus at the reception side according to claim 6, wherein the means for restoring the second signal comprises at least one of means for converting the frequency, means for limiting the band and means for expanding the time axis.

9. A television signal processing apparatus at the reception side according to claim 6, wherein the means for removing the offset of the pedestal comprises means for converting a level for clamping the first signal and a level for clamping the second signal.

Fig. 1

Fig. 2

EP 0 510 973 A1

Fig. 3

T 3

T 5

T 2

T 4

Offset
P

A 1   A 2

T 1

Fig. 4

Fig. 5

Fig. 6

Black level

Fig. 7

(a)

Front porch
T 2

Back porch
T 3

T 5

Set-up level
A 2

Pedestal level

Color burst signal.
T 4

Horizontal sync signal
T 1

A 1

(b)

T 6

Clamp pulse

EP 0 510 973 A1

Fig. 8

EP 0 510 973 A1

41

42

43

44

45

49

50

| Signal source | | Distributor | | Vertical direction compressor | | Selector | | Selector | | Transmitter |

46

47

48

| Additional information converter | | Set-up adder |

| Blanking interval signal generator |

Fig. 9

Monitor — 68

Adder — 65

Vertical direction expander — 64

Distributor — 63

Tuner — 62

61

Additional information decoder — 67

Set-up remover — 66

Fig. 10

Top and bottom bars

Display area

60 TV lines

360 TV lines

440 TV lines

60 TV lines

Top and bottom bars

EP 0 510 973 A1

Fig. 11

```
                                    ┌─────────────┐
           ┌───────────────────┐    │ 103         │
           │ 101               │    │ Multiplex   │
        ┌──┤ Vertical axis     ├────┤ circuit     ├───
        │  │ high pass filter  │    │             │
        │  └───────────────────┘    └──────┬──────┘
        │                                  │
        │  ┌───────────────────┐           │
        │  │ 102               │           │
        └──┤ Horizontal axis   ├───────────┘
           │ high pass filter  │
           └───────────────────┘
```

Fig. 12

```
   ┌───────────────────┐   ┌──────────┐   ┌─────────────────────┐
   │ 111               │   │ 112      │   │ 113                 │
───┤ Time axis         ├───┤ Filter   ├───┤ Frequency           ├───
   │ expanding circuit │   │          │   │ conversion circuit  │
   └───────────────────┘   └──────────┘   └─────────────────────┘
```

Fig. 13

121 → Clamp circuit

122 → Clamp level converter

**European Patent Office**

## EUROPEAN SEARCH REPORT

Application Number

EP 92 30 3661

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | WO-A-9 014 732 (INDEPENDENT BROADCASTING AUTHORITY) | 1-3,5-8 | H04N7/00 |
| Y | * the whole document * | 4 | H04N5/44 |
| A |  | 9 |  |
|  | --- |  |  |
| X | WO-A-9 006 655 (TELEFUNKEN FERNSEH UND RUNDFUNK GMBH) | 1-3,6-8 |  |
|  | * claims 1-5 * |  |  |
|  | --- |  |  |
| Y | US-A-4 961 112 (SUGIMORI ET AL.) | 4 |  |
|  | * abstract; figure 1 * |  |  |
|  | ----- |  |  |

TECHNICAL FIELDS SEARCHED (Int. Cl.5 )

H04N

The present search report has been drawn up for all claims

| Place of search | Date of completion of the search | Examiner |
|---|---|---|
| THE HAGUE | 07 SEPTEMBER 1992 | BOSCH F.M.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)